# EUROPÄISCHE PATENTSCHRIFT

(11) **EP 1 841 826 B1**
(45) Veröffentlichungstag und Bekanntmachung des Hinweises auf die Patenterteilung: **08.10.2008**
(21) Anmeldenummer: 06704097.2
(22) Anmeldetag: 27.01.2006
(51) Int. Cl.: C09D 1/00, C09D 5/00

(54) **BESCHICHTETES METALL-SUBSTRAT**
COATED METAL SUBSTRATE
SUBSTRAT MÉTALLIQUE POURVU D'UN REVÊTEMENT

(30) Priorität: 28.01.2005 DE 102005005334
(43) Veröffentlichungstag der Anmeldung: 10.10.2007
(73) Patentinhaber: BLANCO GmbH + Co KG, 75038 Oberderdingen (DE); n-tec GmbH, 84051 Essenbach/Altheim (DE)
(72) Erfinder: HAJEK, Andreas, 74336 Brackenheim (DE); INTERWIES, Jan c/o n-tec GmbH, 84051 Essenbach/Altheim (DE)
(74) Vertreter: Wössner, Gottfried
(86) Internationale Anmeldenummer: PCT/EP2006/000716
(87) Internationale Veröffentlichungsnummer: WO 2006/079543

(56) Entgegenhaltungen:
- DE-A1- 10 159 288
- DE-A1- 19 917 367
- DE-C1- 3 403 894

## Beschreibung

Die Erfindung betrifft ein beschichtetes Metall-Substrat, insbesondere ein beschichtetes Edelstahlsubstrat oder edelstahlähnliches Substrat, sowie ein Verfahren zu dessen Herstellung.

Edelstahloberflächen oder edelstahlähnliche Oberflächen von metallischen Substraten werden häufig bei Gebrauchsgegenständen, Möbeln und dergleichen eingesetzt, wo es auf deren dekorative Wirkung ankommt, da die Edelstahloberfläche mit ihrer gebürsteten Optik Gebrauchsgegenständen, Möbeln und dergleichen einen hochwertigen Charakter verleihen. Darüber hinaus sind Edelstahloberflächen reinigungsfreundlich und restistent gegen eine Vielzahl von Umwelteinflüssen.

Die Einsatzbereiche reichen deshalb bei den Gebrauchsgegenständen und Möbeln auch in den Bereich von Sanitäreinrichtungen, wie z.B. Edelstahlspülen Armaturen, Seifen- und Papierspender, ferner in den Bereich der Küchen- und Haushaltsgeräte, wie z.B. Dunstabzugshauben, Kühlschränke, und darüber hinaus Möbelfronten, Türen, Tore, Klinken, Briefkästen, Metallschränke und dergleichen.

Die hochwertige Optik von Edelstahloberflächen oder edelstahlähnlich ausgebildeten Oberflächen, leidet allerdings zum Teil darunter, dass Fingerabdrücke sehr gut sichtbar sind und den ästhetischen Eindruck des Gebrauchsgegenstandes, Möbels etc. empfindlich stören.

Es wurde deshalb schon vorgeschlagen, die Edelstahloberflächen mit Beschichtungen zu versehen, um die Oberflächen gegen Fingerabdrücke unempfindlicher zu machen und auch die Reinigungsfähigkeit der Oberfläche zu verbessern bzw. den Aufwand bei der Entfernung von Fingerabdrücken zu vermindern.

Hierbei wurden Beschichtungssysteme auf Sol-Gel-Basis (vgl. DE 101 59 288 A1) oder aber Dickschichtlacke verwendet, wobei beide Systeme das Problem mit sich bringen, dass die Beschichtungen in der Regel Beschichtungsdicken im Bereich zwischen 1 und 100 µm verlangen. Beschichtungen dieser Systeme sind mit dem Nachteil behaftet, dass diese den mechanischen Beanspruchungen, denen sie im Gebrauch ausgesetzt sind, nicht ausreichend Stand halten und dadurch sehr schnell nicht zu übersehende Gebrauchsspuren aufweisen. Dies verstärkt sich häufig noch durch den damit einhergehenden Verlust der schmutzabweisenden Eigenschaften.

Die Anwendbarkeit dieser Beschichtungssysteme ist zum einen beschränkt, da häufig die Wirkung der Edelstahloberfläche nicht beeinträchtigt werden soll. Darüber hinaus wird die Haptik der Oberfläche verändert, und insbesondere bei Dickschichtlackierungen wird ein nicht neutrales Verhalten dieser Beschichtungen bei Beschädigungen beobachtet, d.h. die Beschädigung ist nicht reparierbar. Die Auftragung dieser Beschichtungssysteme ist ebenfalls dahingehend problematisch, dass sich sehr leicht Lunker, Stippen oder andere Inhomogenitäten in der Beschichtung bilden können.

Aufgabe der vorliegenden Erfindung ist es, eine Beschichtung auf einem der eingangs beschriebenen Metall-Substrate zu schaffen, welche einfach aufzubringen ist und insbesondere die Optik von Edelstahlsubstraten und Edelstahl ähnlichen Substraten im Wesentlichen unbeeinflusst lässt.

Diese Aufgabe wird erfindungsgemäß bei einem beschichteten Metall-Substrat dadurch gelöst, dass es eine auf einem Oberflächenbereich des Substrates aufgetragene Beschichtung mit einer Schichtdicke von 300 nm oder weniger auf weist, wobei die Beschichtung ein Polymermaterial umfasst, hergestellt unter Verwendung eines oder mehrerer Silan- und/oder Kieselsäuremonomeren, und dass zwischen dem Metall-Substrat und der Beschichtung eine SiO₂-basierende Haftvermittlerschicht angeordnet ist.

Vorteilhaft bei dieser Art der Beschichtung von Metall-Substraten ist, dass sich die Polymermaterialien, die unter Verwendung von einem oder mehreren Silan- und/oder Kieselsäuremonomeren hergestellt sind, in sehr geringen Schichtdicken auftragen lassen, diese Schichtdicken fest mit der Oberfläche über die Haftvermittlerschicht verankerbar sind und diese sowohl mechanisch als auch chemisch erheblich besser belastbar sind als die herkömmlich bekannten Beschichtungen.

Erstaunlicherweise erhält man auch mit Beschichtungssystemen, wie sie in der DE 101 59 288 A1 beschrieben sind, zufriedenstellende Resultate und zwar mit Schichtdicken, die weit unter den dort empfohlenen Schichtdicken liegen.

Bevorzugte mittlere Schichtdicken liegen bei 200 nm oder darunter.

Zufriedenstellende Ergebnisse erzielt man bereits mit Beschichtungsgewichten von 0,15 g/m², insbesondere 0,25 g/m², der fertig ausgehärteten Beschichtung. Letztere entsprechen Schichtdicken von ca. 20 nm.

Darüber hinaus lassen die erfindungsgemäßen Beschichtungen das Metall-Substrat sowohl hinsichtlich des visuellen Eindruckes als auch der Haptik im Wesentlichen unverändert, was insbesondere auch der geringen Schichtdicke, mit der diese Beschichtungen aufgebracht werden können, geschuldet ist.

Die Haftvermittlerschicht erreicht ihre volle Funktion schon bei sehr geringen Schichtdicken, die wesentlich geringer sind als die Schichtdicke der eigentlichen Beschichtung.

So reicht eine wenige SiO₂-Moleküle dicke Haftvermittlerschicht bereits aus, um eine geschlossene, deckende Schicht zu bilden, auf der die Beschichtung mit guter Haftung verankert werden kann. Typischerweise sind die Schichtdicken der Haftvermittlerschicht ≤ 10 nm, bevorzugt deutlich kleiner als 10 nm.

Bevorzugt wird die SiO₂-basierenden Haftvermittlerschicht nur wenige nm dick sein. Diese Haftvermittlerschichten garantieren eine besonders gute Verbindung zwischen Beschichtung und Substrat, und darüber hinaus lassen sich SiO₂-basierte Haftvermittlerschichten auch noch relativ einfach auf dem Substrat aufbringen.

Die Schichtdicke, mit der die SiO₂-basierte Haftvermittlerschicht aufgetragen wird kann zwar auch dicker sein als oben empfohlen, jedoch vermeidet man bei den genannten bevorzugten Obergrenzen für die Schichtdicken, dass sich das optische Erscheinungsbild des Substrats ändert und dass aufgrund exzessiv abgelagertem SiO₂-Material die Haftung der Beschichtung wieder schlechter wird, aufgrund von nur lose abgelagerter SiO₂-Anteile.

Metallische Substratoberflächen, die in der Regel mit organischen Rückständen behaftetet sind, müssen entsprechend der Erfindung nicht notwendigerweise aufwändig nasschemisch oder plasmatechnisch gereinigt werden, bevor die erfindungsgemäße Beschichtung aufgetragen wird, sondern es reicht z.B. eine Gasbeflammung und eine Abscheidung von Siliciumoxid in einem Arbeitsgang. Damit lässt sich sehr kostengünstig in einem einzigen Arbeitsgang die Reinigung der Oberfläche und die Auftragung einer Haftvermittlerschicht auf der Substratoberfläche erzielen.

Bevorzugt wird die Haftvermittlerschicht im Wesentlichen aus SiO₂ bestehen.

Ferner lassen sich die erfindungsgemäßen Beschichtungen bei Beschädigung sehr einfach mittels eines noch zu beschreibenden Regenerationssystemes wieder herstellen, insbesondere auch dann, wenn Oberflächenkratzer nicht nur die Beschichtung, sondern auch das darunter liegende Metall betreffen. Das Vorhandensein einer SiO₂-Hlaftvermittlerschicht ist für die Anwendung als Regenerationssystem keine Voraussetzung.

Die erfindungsgemäße Beschichtung hat neben hydrophoben auch oleophobe Eigenschaften, so dass die Reinigungsfreundlichkeit der Oberflächen stark erhöht ist.

Das erfindungsgemäß verwendete Polymermaterial zur Verwendung bei der Beschichtung auf dem Edelstahlsubstrat wird vorzugsweise hergestellt unter der Verwendung von einem oder mehreren der Monomeren, welche ausgewählt sind aus Alkylsilanen, insbesondere ein- oder mehrfach- und perfluorierten Alkylsilanen (beispielsweise Tridecafluorooctyltriethoxysilan), Arylsilanen, aminofunktionellen Silanen, glykolfunktionellen Silanen, mercaptofunktionellen Silanen, methacrylfunktionellen Silanen, vinylfunktionellen Silanen und Kieselsäureester, wie z.B. Tetraethylorthosilkat.

Diese Monomere werden bevorzugt zunächst einer Hydrolysereaktion unterworfen, die häufig in geringem Maße von einer Kondensationsreaktion begleitet ist. Das so erhaltene (Polymer-)Material (im Folgenden kurz Vorpolymerisat genannt) wird dann in geringen Schichtdicken auf dem Metall-Substrat aufgetragen. Bei der Verarbeitung der Monomeren zu dem Vorpolymerisat entstehen Nanopartikel-förmige Materialien (Partikelgrößen häufig im Bereich von 5 bis 10 nm) als Zwischenprodukte, die sich in einer folgenden Kondensationsreaktion nach dem Auftrag der Beschichtung auf dem Metallsubstrat als Bindemittel aushärten lassen. Besonders große Nanopartikel des Vorpolymerisats werden bei der Aufbringung von Beschichtungen mit Schichtdicken von 200 nm oder weniger mechanisch sehr schnell abgetragen und beeinträchtigen deshalb die Optik und Haptik nicht.

Eine weitere Verbesserung der Reinigungsfreundlichkeit wird bei der Beschichtung erzielt, wenn die Beschichtungsmasse einen in das Polymermaterial eingelagerten Füllstoff in Form von zusätzlichen Nanopartikeln mit einer Partikelgröße < 300 nm umfasst. Die mit solchen Beschichtungsmassen erzielten Schichtdicken sind besser mit dem Begriff Schichthöhe zu beschreiben, da die Nanopartikel aufgrund ihrer Größe aus der in der Regel deutlich dünneren Polymermatrixschicht herausragen. Die Schichthöhe hängt in der Regel von der Partikelgröße der verwendeten Nanopartikel-Füllstoffe ab.

Weiter bevorzugt liegt der mittlere Durchmesser der Füllstoff-Nanopartikel im Bereich von 100 bis 200 nm, weiter bevorzugt 160 bis 180 nm.

Anteile von deutlich kleineren Nanopartikeln im Füllstoff sind unproblematisch, während Partikel > 300 nm möglichst vermieden werden sollten.

Beispiele für Nanopartikel-Füllstoffe, die sich bevorzugt in das Polymermaterial der Beschichtung einlagern lassen, sind Nanopartikel ausgewählt aus aus Oxiden von Aluminium, Zirkon, Silizium und Eisen sowie Alkalimetall enthaltenden Mischoxiden und/oder Polyfluorethylen (teil- oder perfluoriertes Kohlenwasserstoffpolymer).

Die Natur der Nanopartikel-Füllstoffe ist für die Beschichtung selbst unkritisch, so dass die Nanopartikel-Füllstoffe danach ausgewählt werden können, welcher Effekt bzw. welche Beeinflussung von Eigenschaften der Beschichtung angestrebt wird.

Es darf an dieser Stelle auf die folgenden Druckschriften verwiesen werden, in denen mittels Nanopartikel-Füllstoffen Eigenschaften von Oberflächen modifiziert wurden: DE 100 43 526 C1, DE 101 55 613 A1, DE 199 17 367 A1, DE 100 51 182 A1 und DE 101 59 288 A1.

Die dort diskutierten Gesichtspunkte gelten in ähnlicher Weise auch im Fall der vorliegenden Erfindung.

Die Nanopartikel-Füllstoffe können mit ihren Anteilen in der Beschichtung in weiten Grenzen variiert werden. Möglich sind Beschichtungen, die bis zu 98 Gew.% Nanopartikel-Füllstoff neben ca. 2 Gew.% Bindemittel und/oder Vernetzerkomponente aus dem Monomeren des Vorpolymerisats enthalten.

Beschichtungen gemäß der vorliegenden Erfindung werden mit ausgezeichneten Gebrauchseigenschaften allerdings bei weitaus geringeren Anteilen an Nanopartikel-Füllstoffen erhalten, wie dies auch die nachfolgenden Beispiele belegen.

Die erfindungsgemäße Beschichtung empfiehlt sich insbesondere bei Sanitärformkörpern wie z.B. Küchenspülen und Möbel- oder Geräteoberflächen im Küchenbereich, bei denen das Anhaften von organischen Rückständen, insbesondere Fettrückständen oder -spritzern, eine besondere Herausforderung bei der Reinigung der Gegenstände darstellt.

Aufgrund der Reparaturfreundlichkeit der Beschichtung bietet sich diese vor allem für mechanischem Abrieb ausgesetzten Oberflächen an.

Bei Küchenspülen wird deshalb mindestens der sichtbare Oberflächenbereich eine erfindungsgemäße Beschichtung tragen.

Die Erfindung betrifft ferner ein Verfahren zur Herstellung eines beschichteten Metall-Substrates, welches die Schritte umfasst:
a) Reinigen eines zu beschichtenden Oberflächenbereiches des Edelstahlsubstrates;
b) Aufbringen einer SiO₂-basierten Haftvermittlerschicht;
c) Bereitstellen einer Beschichtemasse, umfassend ein Polymermaterial, hergestellt unter Verwendung von Hydrolyse eines oder mehrerer Silan- und/oder Kleselsäuremonomeren;
d) Auftragen der Beschichtemasse auf die zu beschichtende Oberfläche des Metall-Substrates; und
e) Aushärten der auf dem Metall-Substrat aufgetragenen Beschichtung unter Kondensation des Polymermaterials.

Die Schichtdicke, mit der die Beschichtemasse aufgetragen wird, ist von deren Feststoffgehalt abhängig und wird so gewählt, dass bei der fertigen Beschichtung eine Schichtdicke von 300 nm oder weniger erzielt wird. Typischerweise werden Nassgewichte bei der Beschichtung von 10 bis 40 g/m² angestrebt, je nach Feststoffgehalt der Beschichtemasse. Bei den in den Beispielen angegebenen Rezepturen erzielt man bei einem Nassgewicht der Beschichtung von ca. 30 g/m² Schichtdicken von ca. 1 µm, die nach dem Trocknen und Aushärten eine fertige Beschichtung mit einer Schichtdicke von ca. 20 nm ergeben, falls die Beschichtemasse keine Nanopartikel-Füllstoffe enthält.

Wie bereits erwähnt, ist die Haftvermittlerschicht eine SiO₂-basierende Haftvermittlerschicht, die bevorzugt im Wesentlichen aus SiO₂ besteht.

Hierbei werden bevorzugt die Schritte a) und b) quasi in einem Arbeitsgang durchgeführt, was z.B. sehr einfach bei einer Behandlung der zu beschichtenden Oberflächenbereiche mit Hilfe einer Gasflamme bzw. einer Gasbeflammung kombiniert mit einer Abscheidung von SiO₂ geschehen kann. Hier wird zunächst die Metallsubstratoberfläche beispielsweise mit einer Propangasflamme gereinigt, der später dann ein Silan, z.B. Tetramethylsilan, zudosiert wird. Dabei scheidet sich dann SiO₂ auf der gerade zuvor gereinigten Oberfläche als Haftvermittlerschicht ab.

Wichtig bei der Beflammung der Metallsubstratoberfläche ist, die Flammtemperatur so einzustellen, dass sich keine Flamm- oder Verbrennungsrückstände an der Oberfläche des Metallsubstrats niederschlagen können. Die Verweilzeit der Gasflamme auf einem zu reinigenden Oberflächenbereich muss ausreichend sein, um alle Verunreinigungen abzureinigen. Diese ist ja nach Ausgangsmaterial und dessen Verschmutzungsgrad unterschiedlich.

Bei der nachfolgenden Abscheidung von SiO₂ wird eine geschlossene SiO₂-Schicht angestrebt, wofür das Aufbringen von Schichten aus wenigen Moleküllagen ausreichend ist. Schichtdicken der SiO₂-Haftvermittlerschicht von häufig sehr viel weniger als 10 nm sind vielfach völlig ausreichend.

Diese Vorgehensweise hat insbesondere den Vorteil, dass zwischen der Reinigung der Oberfläche und dem Aufbringen der Haftvermittlerschicht kein zeitlicher Versatz vorkommt, in dem die Oberfläche erneut einer Verschmutzung ausgesetzt werden kann. Vielmehr wird dadurch sichergestellt, dass die Haftvermittlerschicht eine sehr fest haftende und direkt auf der gereinigten Oberfläche aufgebrachte Haftvermittlerschicht ist.

Die Reinigung der Metallsubstratoberfläche kann allerdings auch konventionell mit einem stark alkalisch wirkenden Reinigungsmittel vorgenommen werden, wobei nachfolgend dann mit demineralisiertem Wasser zu spülen ist.

Auch andere, Lösemittel-basierende herkömmliche Reinigungsverfahren bieten sich an.

Danach kann wie zuvor beschrieben SiO₂ auf der gereinigten Oberfläche abgeschieden werden.

In dem Verfahren werden als Monomere insbesondere Monomere eingesetzt, welche ausgewählt sind aus Alkylsilanen, insbesondere ein- oder mehrfach und per-fluorierten Alkylsilanen, Arylsilanen, aminofunktionellen Silanen, glykolfunktionellen Silanen, mercaptofunktionellen Silanen, methacrylfunktionellen Silanen, vinylfunktionellen Silanen und Kieselsäureestern.

Diese Monomeren werden in Gegenwart eines Hydrolyse- und Kondensationskatalysators einer weitgehenden Hydrolyse und partiellen Kondensation in der Regel in der Gegenwart eines geeigneten Lösemittels unterworfen, bevor sie als Beschichtemasse zu einer Beschichtung verarbeitet werden. Diese Reaktion wird bis zu dem Punkt durchgeführt, bei dem der gewünschte Hydrolysegrad der Silane eingestellt ist, der bevorzugt bei mehr als 90 %, weiter bevorzugt ≥ 95 % und am besten bei 98 % oder mehr liegt. Bei dem vorgegebenen Hydrolysegrad weist das so erhaltene Vorpolymerisat noch eine ausreichend geringe, wasserähnliche Viskosität auf, so dass dieses in sehr dünnen Schichten, d.h. insbesondere Schichten ≤ 300 nm, auf das Substrat aufgetragen werden kann. Reaktionszeiten von ca. 1 Stunde sind vielfach ausreichend zum Erreichen eines geeigneten Hydrolysegrads.

Aufgrund der Auswahl der Monomeren einerseits und der SiO₂-basierten Haftvermittlerschicht andererseits, wird eine besonders gute Anbindung der Beschichtung an das darunter liegende Substrat gewährleistet.

Die bei der Hydrolyse- und Kondensationsreaktion eingesetzten Katalysatoren umfassen bevorzugt ein oder mehrere Salze von Al, Ce, Ga, Ge, Sn, Ti, Zr, Hf, V, Nb und Ta, die mit einer Säure, insbesondere einer organischen Säure oder einer Mineralsäure, gebildet sind.

Gegebenenfalls können der Beschichtemasse Nanopartikel-Füllstoffe zugemischt werden. Dies kann gegebenenfalls nach dem Vorpolymerisieren der Monomeren geschehen, insbesondere dann, wenn von den Füllstoffen eine Katalyse der Hydrolyse- und Kondensationsreaktion zu erwarten ist.

Die Nanopartikel-Füllstoffe können aus einer Vielzahl verfügbarer Füllstoffe ausgewählt werden. Beispielhafte Nanopartikel-Füllstoffe sind z.B. aus der DE 100 51 182 A1 bekannt und bereits im Zusammenhang mit der Darstellung der erfindungsgemäß beschichteten Metallsubstrate beschrieben.

Aufgrund der Größe der Nanopartikel-Füllstoffe ergibt sich eine Schichthöhe der Beschichtung, die von der Schichtdicke, in der das matrixbildende Polymer aufgetragen ist, beträchtlich abweicht.

Bei den bevorzugt eingesetzten Nanopartikel-Füllstoffen mit Partikelgrößen bis zu 200 nm ergeben sich Schichthöhen von ca. 200 nm, wobei die einzelnen Nanopartikel des Füllstoffs aus der Schicht, die von dem Matrixpolymer gebildet wird und in die die Nanopartikel eingebunden sind, herausragen. Die Schichtdicke der Polymermatrix liegt dabei weiter beispielsweise bei ca. 20 nm.

Das Auftragen der Beschichtemasse gemäß Schritt d) des oben genannten erfindungsgemäßen Verfahrens ist relativ unkritisch und kann beispielsweise mittels Tauchen, Spritzen, Sprühen, Bestreichen, Schleudern, Polieren, Beschwallen oder elektrostatisch erfolgen. Die Wahl des jeweiligen Auftragverfahrens hängt unter anderem auch von der Geometrie der zu beschichtenden Oberfläche des Metall-Substrates ab.

Das Aushärten der Beschichtung unter Vervollständigung der Kondensation der Beschichtemasse findet vorzugsweise dadurch statt, dass man das Metall-Substrat mit der Beschichtung auf eine Temperatur von 100 °C oder mehr während einer Zeitdauer von 20 min oder länger erwärmt.

Weiter bevorzugt wird die Temperatur beim Aushärten im Bereich von 120 bis 180 °C gewählt. Weiter bevorzugte Zeitdauern sind mindestens 30 min, insbesondere mindestens 60 min.

Alternativ kann eine Strahlungshärtung der Beschichtung erfolgen, insbesondere eine IR- oder UV-Strahlungshärtung. Die thermische Härtung wird vor allem bei Metallsubstraten mit komplexer Geometrie bevorzugt.

Bei einem bevorzugten erfindungsgemäßen Verfahren wird die ausgehärtete Beschichtung in einem Folgeschritt f), der sich an Schritt e) anschließt, poliert, wobei Anteile der Füllstoffe, die nur wenig oder gar nicht in das Bindemittel der Beschichtung eingebunden sind, dabei abgetragen werden.

Dies garantiert eine besonders gleichmäßige Schichtdicke und eine besonders glatte Oberfläche mit geringsten Oberflächenunregelmäßigkeiten. Hierbei lassen sich auch Unebenheiten in der Beschichtung leicht einebnen.

Bei einem weiter bevorzugten Verfahren wird im Falle der Beschädigung der beschichteten Oberfläche des Metall-Substrates, insbesondere durch Gebrauchsspuren, wie z.B. Kratzer oder dergleichen, der beschädigte Oberflächenbereich mit einer Paste poliert, wobei die Paste einerseits Polierkörper und andererseits ein Silan-Monomer-Vorpolymerisat umfasst.

Die hier einzusetzenden Silan-Monomer-Vorpolymerisate entsprechen den Vorpolymerisaten, die zuvor im Zusammenhang mit dem Auftrag der Beschichtung auf der Substratoberfläche beschrieben worden sind.

Zur Beseitigung der Gebrauchsspuren lassen sich Polierkörper einsetzen, die für die Metallbearbeitung an sich bekannt sind. So lässt sich eine ganze Reihe von anorganischen, mineralischen oder synthetischen sowie oxidischen und nicht oxidischen Materialien verwenden, wie die nachstehende Auflistung zeigt:
Siliziumcarbid
Bornitrid
Diamant
Calcium-/Magnesiumoxid (Wiener Kalk)
Aluminiumoxid (Korund, Tonerde)
Siliziumoxid (Quarz)
Zirkonoxid (Zirkon)
Eisenoxid (Hämatit, Magnetit)
Chromoxid (Cr₂O₃)

Zum Polieren von Edelstahloberflächen werden bevorzugt Elektrokorund (geschmolzene Tonerde) oder Chromoxid verwendet. Elektrokorund kann als universellstes Poliermittel betrachtet werden. Die Wirkung dieses Poliermittels beruht darauf, dass es zunächst etwas stärker angreift und in dem Maße, wie sich das einzelne Polierkornagglomerat zerdrückt und zerteilt, das Polierbild (entspricht der Mikrorauigkeit der Oberfläche) immer feiner wird. In der Regel kommen mittlere Korngrößen zum Einsatz, welche im Bereich von 0,25 bis 10 µm liegen. Die Kornform und -beschaffenheit hängt von den Herstellungsbedingungen der Poliermittel ab. Geeignet sind kantige Formen oder aber auch runde Formen, deren Oberflächen durch Calcinieren eine Porosität aufweisen. Bei den für den Haushaltsbereich gedachten Polierpasten empfehlen sich häufig Tonerde oder Wiener Kalk als Poliermittel.

Die Polierkörper werden besonders bevorzugt ausgewählt aus Al₂O₃- und SiO₂-Partikeln, wobei die Partikelgrößen im Mittel bevorzugt zwischen 1 und 3 µm liegen.

Vorteilhaft kommen Al₂O₃- und SiO₂-Partikel als Polierkörper zum Einsatz, wobei allerdings der Al₂O₃-Gehalt überwiegt, besonders bevorzugt 70 Gew.-% des Polierkörperanteils oder mehr ausmacht.

Die zu verwendende Paste, im Folgenden auch kurz Polier- oder Auffrischpaste genannt, kann ein organisches Lösemittel enthalten oder aber wasserbasierend hergestellt sein.

Die Polierpaste wird bevorzugt nach dem Poliervorgang noch eine weitere Zeitdauer auf dem beschädigten Oberflächenbereich belassen und erst danach Pastenreste zusammen mit eventuellem Metallabrieb entfernt. Die Pastenreste beinhalten zum einen die Polierkörper, die aufgrund ihrer Partikelgröße wenig oder gar nicht in die neu gebildeten Beschichtungen eingebunden sind. Außerdem beinhalten die Pastenreste gegebenenfalls Partikel von pyrogener Kieselsäure, falls diese zur Einstellung der Viskosität der Paste zugegeben wurden, an denen sich Partikel des Metall-Substratabriebs bevorzugt anlagern.

Der Anteil der Polierkörper an der Polierpaste kann bereits bei 2 Gew.% ausreichende Wirkung entfalten. Häufig jedoch wird der Anteil im Bereich von 5 bis 15 Gew.% liegen. Für die Behandlung sehr grober Gebrauchsspuren und Kratzer in der Substratoberfläche können aber auch Polierkörperanteile von 50 Gew.% und mehr, bezogen auf das Gesamtgewicht der Paste, zum Einsatz gelangen.

Zur Einstellung der Viskosität kommen übliche Viskositätsregler wie z.B. pyrogene Kieselsäure (z.B. Aerosil der Fa. Degussa AG) zum Einsatz.

Unter der weiteren Zeitdauer wird vorzugsweise eine Zeitdauer von 1 bis 10 min verstanden.

Die erfindungsgemäße Polierpaste lässt sich generell bei auf Silan- und/oder Kieselsäureestern basierenden Beschichtungen verwenden, unabhängig davon, ob die Beschichtung über eine spezielle Haftvermittlerschicht mit der Substratoberfläche verbunden ist.

So ist es auch vor der Anwendung der Polierpaste nicht notwendig, die durch die Gebrauchsspuren ebenfalls beschädigte SiO₂-Haftvermittlerschicht wiederherzustellen, sondern die Polierpaste kann direkt auf die metallische Oberfläche des Substrats aufgetragen werden.

Die Erfindung betrifft des Weiteren eine Polierpaste zur Durchführung des zuvor beschriebenen Verfahrens zur Reparatur einer Beschädigung der beschichteten Oberfläche, wobei die Paste für Edelstahloberflächen geeignete Polierkörper sowie ein Vorpolymerisat aus einem oder mehreren Silanmonomeren umfasst. Die Silanmonomeren des Vorpolymerisates sind vorzugsweise ausgewählt aus Alkylsilanen, insbesondere ein- oder mehrfach fluorierten Alkylsilanen, Arylsilanen, aminofunktionellen Silanen, glykolfunktionellen Silanen, mercaptofunktionellen Silanen, methacrylfunktionellen Silanen, vinylfunktionellen Silanen und Kieselsäureester.

Geeignete Polierkörper sind bereits weiter oben im Einzelnen genannt worden.

Für das Aufbringen der Polierpaste zum Auffrischen der Beschichtung und die Beseitigung gebrauchsüblicher Kratzspuren reicht ein einfach händisch zu erzielender Polierdruck.

Die Polierpaste wird entweder wasserbasierend oder basierend auf einem organischen Lösemittel hergestellt.

Für das Aushärten des Bindemittels an den behandelten Stellen reicht einfaches Trocknen lassen.

Diese und weitere Vorteile der Erfindung sind im Folgenden anhand der Beispiele noch näher erläutert.

### Beispiel 1:

20 g Glycidoxypropyltriethoxysilan (GLYEO, Fa. Degussa-Hüls), 10 g Methyltrimethoxysilan (MTMS, Fa. Degussa-Hüls) und 4,3 g des Fluoralkylsilans Dynasylan F 8261 (Fa. Degussa-Hüls) werden in einer Mischung von 40 g Isopropanol und 10 g Testbenzin gelöst. Zu dieser Mischung wird unter Rühren 10 g Kieselsäuresol in Wasser Levasil 200E/20% (H.C. Starck) zugegeben. Anschließend wird unter starkem Rühren 0,7 g HCl (20%) zugegeben und noch eine Stunde bei Raumtemperatur gerührt. Die Lösung kann mittels gängiger Auftragstechniken auf die mit einer SiO₂-Schicht versehenen Edelstahlsubstrate aufgebracht werden. Im vorliegenden Beispiel wird eine Schicht mit einer Schichtdicke von ca. 1 µm durch Sprühen aufgetragen und anschließend bei 160 °C für 30 Minuten ausgehärtet. Die so erhaltene Schicht hatte eine Höhe von ca. 200 nm und zeigte gute hydrophobe und oleophob Eigenschaften, gute Abriebbeständigkeit und gutes Abperlverhalten gegenüber Wasser.

### Beispiel 2:

30 g Glycidoxypropyltriethoxysilan (GLYEO, Fa. Degussa-Hüls), 10 g Methyltrimethoxysilan (MTMS, Fa. Degussa-Hüls), 10 g Tetraethylorthosilikat (Dynasil A der Fa. Degussa-Hüls) und 4,1 g des Fluoralkylsilans Dynasylan F 8261 (Fa. Degussa-Hüls) werden in einer Mischung von 35 g Isopropanol und 10 g Testbenzin gelöst. Zu dieser Mischung wird unter Rühren 0,9 g HCl (20%) zugegeben und noch drei Stunden bei Raumtemperatur gerührt. Nach einer Standzeit von 24 Stunden kann die Lösung mittels gängiger Auftragstechniken auf die mit einer SiO₂-Schicht versehenen Edelstahlsubstrate aufgebracht werden. Im vorliegenden Beispiel wird eine Schicht mit einer Schichtdicke von ca. 1 µm durch Sprühen aufgetragen und anschließend bei 160 °C für 30 Minuten ausgehärtet. Die so erhaltene Schicht weist eine Höhe von ca. 200 nm auf und zeigt gute hydrophobe und oleophob Eigenschaften und gutes Abperlverhalten gegenüber Wasser, gute Abriebbeständigkeit und chemische Beständigkeit.

### Beispiel 3:

### Polierpaste

Zur Herstellung der Polierpaste werden die folgenden Bestandteile miteinander vermischt. Man erhält eine Zusammensetzung mit einer pastösen Konsistenz bei 25 °C.

### Bestandteile der Polierpaste

114 g Octyltriethoxysilan 44 g Schwefelsäure (5%ig in Wasser) 93 g Al₂O₃-Partikel (P608 von Alcoa), Partikelgröße ca. 1 - 2,5 µm 95 g Al₂O₃-Partikel (P30 von Alcoa), Partikelgröße ca. 0,5 - 1 µm 95 g pyrogene Kieselsäure Aerosil 816 (Degussa AG) 342 g Ethanol 310 g demineralisiertes Wasser

Die Polierpaste lässt sich mit einem Schwamm oder Tuch auf beschädigten Stellen eines mit einer Silan/Kieselsäureester basierenden Beschichtungsmasse beschichteten Substrats zur Auffrischung der Beschichtung auftragen.

Hierbei wurde überraschenderweise festgestellt, dass beim Pollervorgang bei einem nach Beispiel 1 oder 2 hergestellten Edelstahlsubstrat der sich bildende Metallabrieb im Wesentlichen an den Polierkörpern und den Partikeln der pyrogenen Kieselsäure anlagert. Der Schwamm bzw. das Tuch sowie die Hautoberfläche des Anwenders weisen dagegen kaum Metallabriebablagerungen auf. Diese lassen sich leicht abwaschen wie das bei konventionellen Edelstahlpolierpasten nicht ohne Weiteres möglich ist.

Die Pollerkörper (Al₂O₃-Partikel) und die pyrogenen Kieselsäurepartikel werden nach einer Einwirkzeit der Paste auf dem zu behandelnden Oberflächenbereich von ca. 1 bis 10 min. zusammen mit überschüssigem Beschichtemittel abgewischt. Die behandelte Oberfläche ist anschließend wieder normal gebrauchsfähig. Insbesondere sind bei der beschädigten Stelle die hydrophoben und oleophoben Eigenschaften wieder hergestellt. Die pyrogene Kieselsäure dient zunächst der Einstellung der pastösen Konsistenz der Polierpaste, übernimmt aber beim Poliervorgang auch die Aufgabe, die Partikel des Metallabriebs, der beim Poliervorgang entsteht, an sich zu binden.

## Patentansprüche

1. Beschichtetes Metall-Substrat, umfassend eine auf einem Oberflächenbereich des Substrates aufgebrachte SiO₂-basierte Haftvermittlerschicht und eine darauf aufgetragene Beschichtung mit einer Schichtdicke kleiner oder gleich 300 nm, wobei die Beschichtung ein Polymermaterial umfasst, hergestellt unter Verwendung eines oder mehrerer Silan- und/oder Kieselsäuremonomeren.

2. Substrat nach Anspruch 1, **dadurch gekennzeichnet, dass** die Haftvermittlerschicht im Wesentlichen aus SiO₂ besteht.

3. Substrat nach Anspruch 1 oder 2, **dadurch gekennzeichnet, dass** die Haftvermittlerschicht eine Dicke von 10 nm oder weniger aufweist.

4. Substrat nach einem der Ansprüche 1 bis 3, **dadurch gekennzeichnet, dass** das Polymermaterial hergestellt ist unter Verwendung von einem oder mehreren Monomeren, ausgewählt aus Alkylsilanen, insbesondere ein- oder mehrfach fluorierten Alkylsilanen, Arylsilanen, aminofunktionellen Silanen, glykolfunktionellen Silanen, mercaptofunktionellen Silanen, methacrylfunktionellen Silanen, vinylfunktionellen Silanen und Kieselsäureestern.

5. Substrat nach einem der Ansprüche 1 bis 4, **dadurch gekennzeichnet, dass** die Beschichtung einen in das Polymermaterial eingelagerten Füllstoff in Form von Nanopartikeln mit einer Partikelgröße kleiner oder gleich 300 nm umfasst.

6. Substrat nach Anspruch 5, **dadurch gekennzeichnet, dass** der Nanopartikel-Füllstoff ausgewählt ist aus Oxiden von Aluminium, Zirkon, Silizium und Eisen sowie Alkalimetall enthaltenden Mischoxiden und/oder Partikeln eines teil- oder perfluorierten Kohlenwasserstoffpolymers.

7. Substrat nach einem der Ansprüche 1 bis 5, **dadurch gekennzeichnet, dass** die Nanopartikel einen mittleren Durchmesser im Bereich von 100 nm bis 200 nm aufweisen.

8. Substrat nach einem der voranstehenden Ansprüche, **dadurch gekennzeichnet, dass** das Edelstahlsubstrat eine Küchenspüle ist.

9. Substrat nach Anspruch 8, **dadurch gekennzeichnet, dass** der beschichtete Oberflächenbereich mindestens den Bereich der Sichtseite der Spüle umfasst.

10. Verfahren zur Herstellung eines beschichteten Metall-Substrates, umfassend die Schritte:
a) Reinigen eines zu beschichtenden Oberflächenbereiches des Metall-Substrates;
b) Aufbringen einer Haftvermittlerschicht;
c) Bereitstellen einer Beschichtemasse, umfassend ein Vorpolymerisat, hergestellt unter Verwendung eines oder mehrerer Silan- und/ oder Kieselsäuremonomeren in Gegenwart eines Hydrolyse- und Kondensationskatalysators;
d) Auftragen der Beschichtemasse auf die zu beschichtende Oberfläche des Metall-Substrates; und
e) Aushärten der auf dem Edelstahlsubstrat aufgetragenen Beschichtung.

11. Verfahren nach Anspruch 10, **dadurch gekennzeichnet, dass** die Beschichtemasse in einer Menge pro Flächeneinheit aufgetragen wird, die einer Schichtdicke in ausgehärtetem Zustand von ≤ 300 nm entspricht.

12. Verfahren nach Anspruch 11, **dadurch gekennzeichnet, dass** in Schritt b) eine SiO₂-basierende Haftvermittlerschicht aufgetragen wird.

13. Verfahren nach Anspruch 12, **dadurch gekennzeichnet, dass** in Schritt b) eine im Wesentlichen aus SiO₂ bestehende Haftvermittlerschicht aufgetragen wird.

14. Verfahren nach Anspruch 12 oder 13, **dadurch gekennzeichnet, dass** die Schritte a) und b) in einem Arbeitsgang durchgeführt werden.

15. Verfahren nach Anspruch 14, **dadurch gekennzeichnet, dass** der zu beschichtende Oberflächenbereich mit Hilfe einer Gasflamme bei gleichzeitiger Abscheidung von SiO₂ gereinigt wird.

16. Verfahren nach einem der Ansprüche 10 bis 15, **dadurch gekennzeichnet, dass** das eine oder mehrere Monomere ausgewählt ist aus Alkylsilanen, ein-, mehrfach- oder per-fluorierten Alkylsilanen, Arylsilanen, aminofunktionellen Silanen, glykolfunktionellen Silanen, mercaptofunktionellen Silanen, methacrylfunktionellen Silanen, vinylfunktionellen Silanen und Kieselsäureester.

17. Verfahren nach einem der Ansprüche 10 bis 16, **dadurch gekennzeichnet, dass** die Vorpolymerisation bis zu dem Punkt durchgeführt wird, bei dem der Hydrolysegrad der Silane 90 % oder mehr beträgt.

18. Verfahren nach Anspruch 17, **dadurch gekennzeichnet, dass** der Hydrolysegrad der Silane 95 % oder mehr beträgt.

19. Verfahren nach einem der Ansprüche 8 bis 18, **dadurch gekennzeichnet, dass** der Katalysator ein oder mehrere Salze von Al, Ce, Ga, Ge, Sn, Ti, Zr, Hf, V, Nb und Ta mit einer Säure umfasst.

20. Verfahren nach einem der Ansprüche 10 bis 19, **dadurch gekennzeichnet, dass** der Beschichtemasse ein Nanopartikel-Füllstoff zugemischt wird.

21. Verfahren nach Anspruch 20, **dadurch gekennzeichnet, dass** der Beschichtemasse ein Nanopartikel-Füllstoff nach dem Vorpolymerisieren zugemischt wird.

22. Verfahren nach Anspruch 20 oder 21, **dadurch gekennzeichnet, dass** der Nanopartikel-Füllstoff ausgewählt wird aus Oxiden von Aluminium, Zirkon, Silizium und Eisen sowie Alkalimetall enthaltenden Mischoxiden und/oder Partikeln, eines teil- oder perfluorierten Kohlenwasserstoffpolymers.

23. Verfahren nach Anspruch 22, **dadurch gekennzeichnet, dass** der Nanopartikel-Füllstoff Polyfluorethylenpartikel umfasst.

24. Verfahren nach einem der Ansprüche 10 bis 23, **dadurch gekennzeichnet, dass** das Auftragen der Beschichtemasse gemäß Schritt d) mittels Tauchen, Spritzen, Sprühen, Bestreichen, Schleudern, Polieren, Beschwallen oder elektrostatisch erfolgt.

25. Verfahren nach einem der Ansprüche 10 bis 24, **dadurch gekennzeichnet, dass** das Aushärten in Schritt e) das Aufheizen des beschichteten Edelstahlsubstrates auf eine Temperatur von 100 °C oder mehr während einer Zeitdauer von 20 min oder länger umfasst.

26. Verfahren nach Anspruch 25, **dadurch gekennzeichnet, dass** die Temperatur beim Aushärten im Bereich von 120 bis 180 °C gewählt wird.

27. Verfahren nach Anspruch 25 oder 26, **dadurch gekennzeichnet, dass** die Zeitdauer mindestens 30 min beträgt.

28. Verfahren nach Anspruch 27, **dadurch gekennzeichnet, dass** die Zeitdauer mindestens 60 min beträgt.

29. Verfahren nach einem der Ansprüche 10 bis 24, **dadurch gekennzeichnet, dass** das Aushärten in Schritt e) eine Strahlungshärtung umfasst.

30. Verfahren nach Anspruch 29, **dadurch gekennzeichnet, dass** die Strahlungshärtung als IR- oder UV-Strahlungshärtung durchgeführt wird.

31. Verfahren nach einem der Ansprüche 10 bis 30, **dadurch gekennzeichnet, dass** die ausgehärtete Beschichtung anschließend an Schritt e) in einem Folgeschritt f) poliert wird, um Überschussanteile der Füllstoffe zu entfernen.

32. Verfahren nach einem der Ansprüche 10 bis 31, **dadurch gekennzeichnet, dass** im Falle der Beschädigung der beschichteten Oberfläche des Metall-Substrates der beschädigte Oberflächenbereich mit einer Paste poliert wird, wobei die Paste Polierkörper sowie ein Silan-Monomer-Vorpolymerisat umfasst.

33. Verfahren nach Anspruch 31, **dadurch gekennzeichnet, dass** die Partikel der Polierkörper ausgewählt sind aus Siliziumcarbid, Bornitrid, Diamant, Calcium/Magnesiumoxid, Aluminiumoxid, Siliziumoxid, Zirkonoxid, Eisenoxid und Chromoxid.

34. Verfahren nach Anspruch 33, **dadurch gekennzeichnet, dass** die Partikel der Polierkörper ausgewählt sind aus Wiener Kalk, Korund, Tonerde, Quarz, Hämatit und Magnetit.

35. Verfahren nach Anspruch 33 oder 34, **dadurch gekennzeichnet, dass** die mittlere Partikelgröße der Polierkörper im Bereich von 0,25 µm bis 10 µm liegt.

36. Verfahren nach Anspruch 35, **dadurch gekennzeichnet, dass** die mittlere Partikelgröße im Bereich von 1 µm bis 3 µm liegt.

37. Verfahren nach einem der Ansprüche 32 bis 36, **dadurch gekennzeichnet, dass** die Paste ein organisches Lösemittel enthält oder wasserbasierend hergestellt ist.

38. Verfahren nach einem der Ansprüche 32 bis 37, **dadurch gekennzeichnet, dass** man die Paste nach dem Poliervorgang noch eine weitere Zeitdauer auf dem beschädigten Oberflächenbereich belässt und dass dann der Pastenüberschuss einschließlich der Polierkörper und zusammen mit eventuellem Metallabrieb entfernt wird.

39. Verfahren nach Anspruch 38, **dadurch gekennzeichnet, dass** die weitere Zeitdauer 1 bis 10 min beträgt.

40. Polierpaste, insbesondere zur Durchführung des Verfahrens nach einem der Ansprüche 31 bis 39, **dadurch gekennzeichnet, dass** die Paste für Metalloberflächen geeignete Polierkörper sowie ein Vorpolymerisat von einem oder mehreren Silan-Monomeren und/oder Kieselsäureestermonomeren umfasst.

41. Polierpaste nach Anspruch 40, **dadurch gekennzeichnet, dass** die Silan-Monomeren des Vorpolymerisates ausgewählt sind aus Alkylsilanen, Fluoralkyl-Silanen, Arylsilanen, aminofunktionellen Silanen, glykolfunktionellen Silanen, mercaptofunktionellen Silanen, methacrylfunktionellen Silanen, vinylfunktionellen Silanen und Kieselsäureester.

42. Polierpaste nach Anspruch 40 oder 41, **dadurch gekennzeichnet, dass** die Paste Polierkörper enthält, welche ausgewählt sind aus Siliziumcarbid, Bornitrid, Diamant, Calcium/Magnesiumoxid, Aluminiumoxid, Siliziumoxid, Zirkonoxid, Eisenoxid und Chromoxid.

43. Polierpaste nach Anspruch 42, **dadurch gekennzeichnet, dass** die Paste Polierkörper enthält, welche ausgewählt sind aus Wiener Kalk, Korund, Tonerde, Quarz, Hämatit und Magnetit.

44. Polierpaste nach Anspruch 42 oder 43, **dadurch gekennzeichnet, dass** der Polierkörperanteil in Kombination Al₂O₃- und SiO₂-Partikel umfasst.

45. Polierpaste nach Anspruch 44, **dadurch gekennzeichnet, dass** der Gehalt an Al₂O₃-Partikeln den Gehalt an SiO₂-Partikeln überwiegt.

46. Polierpaste nach Anspruch 45, **dadurch gekennzeichnet, dass** der Gehalt der Al₂O₃-Partikel 70 Gew.% oder mehr des Gesamtgehalts an Polierkörpern der Paste beträgt.

47. Polierpaste nach einem der Ansprüche 40 bis 46, **dadurch gekennzeichnet, dass** die Polierkörper eine mittlere Partikelgröße von 0,25 µm bis 10 µm aufweisen.

48. Polierpaste nach Anspruch 47, **dadurch gekennzeichnet, dass** die Polierkörper eine mittlere Partikelgröße von 1 µm bis 3 µm aufweisen.

49. Polierpaste nach einem der Ansprüche 40 bis 48, **dadurch gekennzeichnet, dass** der Anteil der Polierkörper an der Polierpaste mindestens 2 Gew.% beträgt.

50. Polierpaste nach Anspruch 49, **dadurch gekennzeichnet, dass** der Anteil der Polierkörper an der Polierpaste 5 bis 15 Gew.% beträgt.

51. Polierpaste nach einem der Ansprüche 40 bis 50, **dadurch gekennzeichnet, dass** die Polierpaste wasserbasierend ist oder ein organisches Lösemittel enthält.

52. Polierpaste nach einem der Ansprüche 40 bis 51, **dadurch gekennzeichnet, dass** die Paste einen Viskositätsregler enthält.

53. Polierpaste nach Anspruch 52, **dadurch gekennzeichnet, dass** der Viskositätsregler pyrogene Kieselsäure ist.

54. Polierpaste nach einem der Ansprüche 40 bis 53, **dadurch gekennzeichnet, dass** die Paste ein partikelförmiges Agens umfasst, welches als Adsorbens für Metallabriebpartikel, die während des Poliervorgangs entstehen, dient.

## Claims

1. Coated metal substrate, comprising an SiO₂-based primer layer applied to an area of the surface of the substrate and a coating with a layer thickness of less than or equal to 300 nm applied thereto, the coating comprising a polymer material made using one or more silane and/or silicic acid monomers.

2. Substrate in accordance with claim 1, **characterized in that** the primer layer consists substantially of SiO₂.

3. Substrate in accordance with claim 1 or 2, **characterized in that** the primer layer has a thickness of 10 nm or less.

4. Substrate in accordance with any one of claims 1 to 3, **characterized in that** the polymer material is made using one or more monomers, selected from alkylsilanes, in particular, alkylsilanes fluorinated once or several times, aryl silanes, aminofunctional silanes, glycolfunctional silanes, mercaptofunctional silanes, methacrylfunctional silanes, vinylfunctional silanes and silicic acid esters.

5. Substrate in accordance with any one of claims 1 to 4, **characterized in that** the coating comprises a filler in the form of nanoparticles with a particle size of less than or equal to 300 nm embedded in the polymer material.

6. Substrate in accordance with claim 5, **characterized in that** the nanoparticle filler is selected from oxides of aluminium, zircon, silicon and iron and mixed oxides containing an alkali metal and/or from particles of a partially fluorinated or perfluorinated hydrocarbon polymer.

7. Substrate in accordance with any one of claims 1 to 5, **characterized in that** the nanoparticles have an average diameter ranging from 100 nm to 200 nm.

8. Substrate in accordance with any one of the preceding claims, **characterized in that** the high-grade steel substrate is a kitchen sink.

9. Substrate in accordance with claim 8, **characterized in that** the coated area of the surface comprises at least the area of the visible side of the sink.

10. Method for the manufacture of a coated metal substrate, comprising the steps:
a) cleaning an area of the surface of the metal substrate to be coated;
b) applying a primer layer;
c) preparing a coating substance, comprising a prepolymer made using one or more silane and/or silicic acid monomers in the presence of an hydrolysis and condensation catalyst;
d) applying the coating substance to the surface of the metal substrate to be coated; and
e) curing the coating applied to the high-grade steel substrate.

11. Method in accordance with claim 10, **characterized in that** the coating substance is applied in an amount per unit of area that corresponds to a layer thickness in the cured state of less than or equal to 300 nm.

12. Method in accordance with claim 11, **characterized in that** an SiO₂-based primer layer is applied in step b).

13. Method in accordance with claim 12, **characterized in that** a primer layer consisting substantially of SiO₂ is applied in step b).

14. Method in accordance with claim 12 or 13, **characterized in that** the steps a) and b) are performed in a single operation.

15. Method in accordance with claim 14, **characterized in that** the area of the surface to be coated is cleaned with the aid of a gas flame while SiO₂ is simultaneously deposited.

16. Method in accordance with any one of claims 10 to 15, **characterized in that** the one or more monomers is or are selected from alkylsilanes, alkylsilanes fluorinated once or several times or perfluorinated alkylsilanes, aryl silanes, aminofunctional silanes, glycolfunctional silanes, mercaptofunctional silanes, methacrylfunctional silanes, vinylfunctional silanes and silicic acid esters.

17. Method in accordance with any one of claims 10 to 16, **characterized in that** the prepolymerization is performed up to the point at which the degree of hydrolysis of the silanes is 90 % or more.

18. Method in accordance with claim 17, **characterized in that** the degree of hydrolysis of the silanes is 95 % or more.

19. Method in accordance with any one of claims 8 to 18, **characterized in that** the catalyst comprises one or more salts of Al, Ce, Ga, Ge, Sn, Ti, Zr, Hf, V, Nb and Ta with an acid.

20. Method in accordance with any one of claims 10 to 19, **characterized in that** a nanoparticle filler is added to the coating substance.

21. Method in accordance with claim 20, **characterized in that** a nanoparticle filler is added to the coating substance after the prepolymerization.

22. Method in accordance with claim 20 or 21, **characterized in that** the nanoparticle filler is selected from oxides of aluminium, zircon, silicon and iron and mixed oxides containing an alkali metal and/or from particles of a partially fluorinated or perfluorinated hydrocarbon polymer.

23. Method in accordance with claim 22, **characterized in that** the nanoparticle filler comprises polyfluoroethylene particles.

24. Method in accordance with any one of claims 10 to 23, **characterized in that** the applying of the coating substance in accordance with step d) is performed by dipping, atomizing, spraying, spreading, centrifuging, polishing, flooding or electrostatically.

25. Method in accordance with any one of claims 10 to 24, **characterized in that** the curing in step e) comprises the heating of the coated high-grade steel substrate to a temperature of 100°C or more for a length of time of 20 min or longer.

26. Method in accordance with claim 25, **characterized in that** the temperature during the curing is selected in the range of from 120 to 180°C.

27. Method in accordance with claim 25 or 26, **characterized in that** the length of time is at least 30 min.

28. Method in accordance with claim 27, **characterized in that** the length of time is at least 60 min.

29. Method in accordance with any one of claims 10 to 24, **characterized in that** the curing in step e) comprises a radiation curing.

30. Method in accordance with claim 29, **characterized in that** the radiation curing is performed as IR or UV radiation curing.

31. Method in accordance with any one of claims 10 to 30, **characterized in that** after step e) the cured coating is polished in a following step f) in order remove excess amounts of the fillers.

32. Method in accordance with any one of claims 10 to 31, **characterized in that** in the event of damage to the coated surface of the metal substrate, the damaged area of the surface is polished with a paste comprising polishing bodies and a silane monomer prepolymer.

33. Method in accordance with claim 31, **characterized in that** the particles of the polishing bodies are selected from silicon carbide, boron nitride, diamond, calcium/magnesium oxide, aluminium oxide, silicon oxide, zircon oxide, iron oxide and chromium oxide.

34. Method in accordance with claim 33, **characterized in that** the particles of the polishing bodies are selected from Vienna polishing chalk, corundum, clay, quartz, haematite and magnetite.

35. Method in accordance with claim 33 or 34, **characterized in that** the average particle size of the polishing bodies ranges from 0.25 µm to 10 µm.

36. Method in accordance with claim 35, **characterized in that** the average particle size ranges from 1 µm to 3 µm.

37. Method in accordance with any one of claims 32 to 36, **characterized in that** the paste contains an organic solvent or is made on the basis of water.

38. Method in accordance with any one of claims 32 to 37, **characterized in that** after the polishing procedure the paste is left on the damaged area of the surface for a further length of time, and **in that** the paste excess including the polishing bodies is then removed together with any abraded metal.

39. Method in accordance with claim 38, **characterized in that** the further length of time is from 1 to 10 min.

40. Polishing paste, in particular, for performing the method in accordance with any one of claims 31 to 39, **characterized in that** the paste comprises polishing bodies suitable for metal surfaces and a prepolymer formed from one or more silane monomers and/or silicic acid ester monomers.

41. Polishing paste in accordance with claim 40, **characterized in that** the silane monomers of the preploymer are selected from alkylsilanes, fluoralkylsilanes, aryl silanes, aminofunctional silanes, glycolfunctional silanes, mercaptofunctional silanes, methacrylfunctional silanes, vinylfunctional silanes and silicic acid esters.

42. Polishing paste in accordance with claim 40 or 41, **characterized in that** the paste contains polishing bodies selected from silicon carbide, boron nitride, diamond, calcium/magnesium oxide, aluminium oxide, silicon oxide, zircon oxide, iron oxide and chromium oxide.

43. Polishing paste in accordance with claim 42, **characterized in that** the paste contains polishing bodies selected from Vienna polishing chalk, corundum, clay, quartz, haematite and magnetite.

44. Polishing paste in accordance with claim 42 or 43, **characterized in that** the proportion of polishing bodies comprises in combination Al₂O₃ particles and SiO₂ particles.

45. Polishing paste in accordance with claim 44, **characterized in that** the content of Al₂O₃ particles exceeds the content of SiO₂ particles.

46. Polishing paste in accordance with claim 45, **characterized in that** the content of Al₂O₃ particles is 70 wt% or more of the total content of polishing bodies in the paste.

47. Polishing paste in accordance with any one of claims 40 to 46, **characterized in that** the polishing bodies have an average particle size of from 0.25 µm to 10 µm.

48. Polishing paste in accordance with claim 47, **characterized in that** the polishing bodies have an average particle size of from 1 µm to 3 µm.

49. Polishing paste in accordance with any one of claims 40 to 48, **characterized in that** the proportion of polishing bodies in the polishing paste is at least 2 wt%.

50. Polishing paste in accordance with claim 49, **characterized in that** the proportion of polishing bodies in the polishing paste is from 5 to 15 wt%.

51. Polishing paste in accordance with any one of claims 40 to 50, **characterized in that** the polishing paste is water-based or contains an organic solvent.

52. Polishing paste in accordance with any one of claims 40 to 51, **characterized in that** the paste contains a viscosity regulator.

53. Polishing paste in accordance with claim 52, **characterized in that** the viscosity regulator is pyrogenic silicic acid.

54. Polishing paste in accordance with any one of claims 40 to 53, **characterized in that** the paste comprises a particulate agent which serves as adsorbent for abraded metal particles resulting from the polishing procedure.

## Revendications

1. Substrat de métal revêtu comprenant une couche d'agent adhésif à base de SiO₂ appliquée sur un domaine superficiel du substrat et un revêtement appliqué sur celle-ci avec une épaisseur de couche inférieure ou égale à 300 nm, le revêtement comprenant un matériau polymère préparé en utilisant un ou plusieurs monomères de silane et/ou d'acide silicique.

2. Substrat selon la revendication 1, **caractérisé en ce que** la couche d'agent adhésif est essentiellement constituée de SiO₂.

3. Substrat selon la revendication 1 ou 2, **caractérisé en ce que** la couche d'agent adhésif présente une épaisseur de 10 nm ou inférieure.

4. Substrat selon l'une quelconque des revendications 1 à 3, **caractérisé en ce que** le matériau polymère est préparé en utilisant un ou plusieurs monomères choisis parmi des alkylsilanes, en particulier des alkylsilanes fluorés une ou plusieurs fois, des arylsilanes, des silanes aminofonctionnels, des silanes glycolfonctionnels, des silanes mercaptofonctionnels, des silanes méthacrylfonctionnels, des silanes vinylfonctionnels et des esters d'acide silicique.

5. Substrat selon l'une quelconque des revendications 1 à 4, **caractérisé en ce que** le revêtement comprend une charge stockée dans le matériau polymère dans la forme de nanoparticules avec une taille de particules inférieure ou égale à 300 nm.

6. Substrat selon la revendication 5, **caractérisé en ce que** la charge de nanoparticules est choisie parmi des oxydes d'aluminium, de zirconium, de silicium et de fer ainsi que des oxydes mixtes contenant des métaux alcalins et/ou des particules d'un ou plusieurs polymères hydrocarbonés partiellement fluorés ou perfluorés.

7. Substrat selon l'une quelconque des revendications 1 à 5, **caractérisé en ce que** les nanoparticules présentent un diamètre moyen dans un domaine de 100 nm à 200 nm.

8. Substrat selon l'une quelconque des revendications précédentes, **caractérisé en ce que** le substrat en acier inoxydable est un évier de cuisine.

9. Substrat selon la revendication 8, **caractérisé en ce que** le domaine superficiel revêtu comprend au moins le domaine du côté visible de l'évier.

10. Procédé pour la préparation d'un substrat de métal revêtu comprenant les étapes :
a) de nettoyage d'un domaine superficiel à revêtir du substrat de métal ;
b) d'application d'une couche d'agent adhésif ;
c) de préparation d'une masse de revêtement comprenant un prépolymère en utilisant un ou plusieurs monomères de silane et/ou d'acide silicique en présence d'un catalyseur d'hydrolyse et de condensation ;
d) d'application de la masse de revêtement sur la surface à revêtir du substrat de métal ; et
e) de durcissement du revêtement appliqué sur le substrat en acier inoxydable.

11. Procédé selon la revendication 10, **caractérisé en ce que** la masse de revêtement est appliquée dans une quantité par unité de surface qui correspond à une épaisseur de couche à l'état durci ≤ 300 nm.

12. Procédé selon la revendication 11, **caractérisé en ce que** l'on applique dans l'étape b) une couche d'agent adhésif à base de SiO₂.

13. Procédé selon la revendication 12, **caractérisé en ce que** l'on applique dans l'étape b) une couche d'agent adhésif constitué essentiellement de SiO₂.

14. Procédé selon la revendication 12 ou 13, **caractérisé en ce que** les étapes a) et b) sont réalisées dans un processus de travail.

15. Procédé selon la revendication 14, **caractérisé en ce que** le domaine superficiel à revêtir est nettoyé à l'aide d'un bec de gaz avec un dépôt simultané de SiO₂.

16. Procédé selon l'une quelconque des revendications 10 à 15, **caractérisé en ce que** l'on choisit le un ou plusieurs monomères parmi des alkylsilanes, des alkylsilanes fluorés une fois, plusieurs fois ou perfluorés, des arylsilanes, des silanes aminofonctionnels, des silanes glycolfonctionnels, des silanes mercaptofonctionnels, des silanes méthacrylfonctionnels, des silanes vinylfonctionnels et un ester d'acide silicique.

17. Procédé selon l'une quelconque des revendications 10 à 16, **caractérisé en ce que** la prépolymérisation est réalisée jusqu'au point auquel le degré d'hydrolyse des silanes est de 90 % ou supérieur.

18. Procédé selon la revendication 17, **caractérisé en ce que** le degré d'hydrolyse des silanes est de 95 % ou supérieur.

19. Procédé selon l'une quelconque des revendications 8 à 18, **caractérisé en ce que** le catalyseur comprend un ou plusieurs sels d'Al, de Ce, de Ga, de Ge, de Sn, de Ti, de Zr, de Hf, de V, de Nb et de Ta avec un acide.

20. Procédé selon l'une quelconque des revendications 10 à 19, **caractérisé en ce que** l'on ajoute par mélange à la masse de revêtement une charge de nanoparticules.

21. Procédé selon la revendication 20, **caractérisé en ce que** l'on ajoute par mélange à la masse de revêtement une charge de nanoparticules après la prépolymérisation.

22. Procédé selon la revendication 20 ou 21, **caractérisé en ce que** l'on choisit la charge de nanoparticules parmi les oxydes d'aluminium, de zirconium, de silicium et de fer ainsi que des oxydes mixtes contenant des métaux alcalins et/ou des particules d'un polymère hydrocarboné partiellement fluoré ou perfluoré.

23. Procédé selon la revendication 22, **caractérisé en ce que** la charge de nanoparticules comprend une particule de polyfluoroéthylène.

24. Procédé selon l'une quelconque des revendications 10 à 23, **caractérisé en ce que** l'application de la masse de revêtement est réalisée selon l'étape d) au moyen d'une immersion, d'une pulvérisation, d'une injection, d'une peinture, d'une centrifugation, d'un polissage, d'une vague ou électrostatiquement.

25. Procédé selon l'une quelconque des revendications 10 à 24, **caractérisé en ce que** le durcissement dans l'étape e) comprend le chauffage du substrat en acier inoxydable revêtu à une température de 100°C ou plus sur une durée de 20 min ou supérieure.

26. Procédé selon la revendication 25, **caractérisé en ce que** la température lors du durcissement est choisie dans un domaine de 120 à 180°C.

27. Procédé selon la revendication 25 ou 26, **caractérisé en ce que** la durée est d'au moins 30 minutes.

28. Procédé selon la revendication 27, **caractérisé en ce que** la durée est d'au moins 60 minutes.

29. Procédé selon l'une quelconque des revendications 10 à 24, **caractérisé en ce que** le durcissement dans l'étape e) comprend un durcissement par rayonnement.

30. Procédé selon la revendication 29, **caractérisé en ce que** le durcissement par rayonnement est réalisé dans la forme d'un durcissement par rayonnement IR ou UV.

31. Procédé selon l'une quelconque des revendications 10 à 30, **caractérisé en ce que** le revêtement durci est ensuite poli après l'étape e) dans l'étape suivante f) pour éliminer les parts en excès de la charge.

32. Procédé selon l'une quelconque des revendications 10 à 31, **caractérisé en ce que** dans le cas de la détérioration de la surface revêtue du substrat de métal le domaine superficiel détérioré est poli avec une pâte, la pâte comprenant un corps de polissage ainsi qu'un prépolymère de monomère de silane.

33. Procédé selon la revendication 31, **caractérisé en ce que** les particules du corps de polissage sont choisies parmi du carbure de silicium, du nitrure de bore, du diamant, de l'oxyde de calcium/ magnésium, de l'oxyde d'aluminium, de l'oxyde de silicium, de l'oxyde de zirconium, de l'oxyde de fer et de l'oxyde de chrome.

34. Procédé selon la revendication 33, **caractérisé en ce que** les particules du corps de polissage sont choisies parmi la chaux de Vienne à polir, le corindon, l'alumine, le quartz, l'hématite et la magnétite.

35. Procédé selon la revendication 33 ou 34, **caractérisé en ce que** la taille moyenne de particules du corps de polissage se trouve dans un domaine de 0,25 µm à 10 µm.

36. Procédé selon la revendication 35, **caractérisé en ce que** la taille moyenne de particules se trouve dans un domaine de 1 µm à 3 µm.

37. Procédé selon l'une quelconque des revendications 32 à 36, **caractérisé en ce que** la pâte contient un solvant organique ou est préparée à base d'eau.

38. Procédé selon l'une quelconque des revendications 32 à 37, **caractérisé en ce que** l'on laisse la pâte après le processus de polissage encore pendant une durée supplémentaire sur le domaine superficiel détérioré et **en ce que** l'on élimine ensuite l'excès de pâte incluant le corps de polissage avec de l'abrasion éventuelle de métal.

39. Procédé selon la revendication 38, **caractérisé en ce que** la durée supplémentaire est de 1 à 10 min.

40. Pâte de polissage, en particulier pour la réalisation du procédé selon l'une quelconque des revendications 31 à 39, **caractérisée en ce que** la pâte comprend pour des surfaces de métal des corps de polissage appropriés ainsi qu'un prépolymère d'un ou plusieurs monomères de silane et/ou monomères d'ester d'acide silicique.

41. Pâte de polissage selon la revendication 40, **caractérisée en ce que** les monomères de silane du prépolymère sont choisis parmi des alkylsilanes, des fluoroalkylsilanes, des arylsilanes, des silanes aminofonctionnels, des silanes glycolfonctionnels, des silanes mercaptofonctionnels, des silanes méthacrylfonctionnels, des silanes vinylfonctionnels et des esters d'acide silicique.

42. Pâte de polissage selon la revendication 40 ou 41, **caractérisée en ce que** la pâte contient des corps de polissage, lesquels sont choisis parmi le carbure de silicium, le nitrure de bore, le diamant, l'oxyde de calcium/magnésium, l'oxyde d'aluminium, l'oxyde de silicium, l'oxyde de zirconium, l'oxyde de fer et l'oxyde de chrome.

43. Pâte de polissage selon la revendication 42, **caractérisée en ce que** la pâte contient des corps de polissage, lesquels sont choisis parmi la chaux de Vienne à polir, le corindon, l'alumine, le quartz, l'hématite et la magnétite.

44. Pâte de polissage selon la revendication 42 ou 43, **caractérisée en ce que** la part en corps de polissage comprend en combinaison des particules de Al₂O₃ et de SiO₂.

45. Pâte de polissage selon la revendication 44, **caractérisée en ce que** la teneur en particules de Al₂O₃ dépasse la teneur en particules de SiO₂.

46. Pâte de polissage selon la revendication 45, **caractérisée en ce que** la teneur en particules de Al₂O₃ est de 70 % en poids ou plus de la teneur totale en corps de polissage de la pâte.

47. Pâte de polissage selon l'une quelconque des revendications 40 à 46, **caractérisée en ce que** les corps de polissage présentent une taille moyenne de particules de 0,25 µm à 10 µm.

48. Pâte de polissage selon la revendication 47, **caractérisée en ce que** les corps de polissage présentent une taille moyenne de particules de 1 µm à 3 µm.

49. Pâte de polissage selon l'une quelconque des revendications 40 à 48, **caractérisée en ce que** la part en corps de polissage sur la pâte de polissage est d'au moins 2 % en poids.

50. Pâte de polissage selon la revendication 49, **caractérisée en ce que** la part en corps de polissage sur la pâte de polissage est de 5 à 15 % en poids.

51. Pâte de polissage selon l'une quelconque des revendications 40 à 50, **caractérisée en ce que** la pâte de polissage est à base d'eau ou contient un solvant organique.

52. Pâte de polissage selon l'une quelconque des revendications 40 à 51, **caractérisée en ce que** la pâte contient un agent de régulation de la viscosité.

53. Pâte de polissage selon la revendication 52, **caractérisée en ce que** l'agent de régulation de la viscosité est de l'acide silicique pyrogène.

54. Pâte de polissage selon l'une quelconque des revendications 40 à 53, **caractérisée en ce que** la pâte comprend un agent en forme de particules, lequel sert d'adsorbant pour des particules d'abrasion métalliques qui sont produites pendant le processus de polissage.
